# EUROPEAN PATENT APPLICATION

(11) **EP 4 516 388 A1**
(43) Date of publication of application: **05.03.2025**
(21) Application number: 24195583.0
(22) Date of filing: 21.08.2024
(51) Int. Cl.: B01F 27/807, B01F 35/60

(54) **DIGITALLY CONTROLLED MIXER HEAD LOCK**

(30) Priority: 21.08.2023 US 202363533732 P
(71) Applicant: Whirlpool Corporation, Benton Harbor, MI 49022 (US)
(72) Inventor: Hill, Eric A., Benton Harbor, 49022 (US); Mock, Brandon T., Benton Harbor, 49022 (US); Rutter, Ryan James, Benton Harbor, 49022 (US)
(74) Representative: Eisenführ Speiser

(57) **Abstract**

A stand mixer (10) includes a base (12) configured for resting on a surface and a mixing head (14) coupled to the base (12) so as to be moveable between a lowered, operative position and a raised, non-use position. A locking mechanism (16) is engageable between the base (12) and the mixing head (14) and has a solenoid (18) having an operative end (20) moveable between a rest condition and an actuated condition and a swing arm (22) pivotably mounted with respect to the solenoid (18). The swing arm (22) is moveable between a locked position, wherein the swing arm (22) is engaged between the mixing head (14) and the base (12), and a release position, wherein the swing arm (22) is disengaged from the base (12). The solenoid (18) acts on a lever end of the swing arm (24) to move the swing arm (22) into the release position when the solenoid (18) is in the actuated condition.

## Description

### CROSS-REFERENCE TO RELATED APPLICATIONS

This application claims priority to and the benefit under 35 U.S.C. § 119(e) of U.S. Provisional Patent Application No. 63/533,732, filed on August 21, 2023, titled, "DIGITALLY CONTROLLED MIXER HEAD LOCK," the disclosure to which is hereby incorporated herein by reference in its entirety.

### BACKGROUND OF THE DISCLOSURE

The present disclosure generally relates to a stand mixer, and more specifically, to a stand mixer having an electromechanical locking mechanism that can be digitally controlled.

### SUMMARY OF THE DISCLOSURE

According to one aspect of the present disclosure, a stand mixer includes a base configured for resting on a surface and a mixing head coupled to the base so as to be moveable between a lowered, operative position and a raised, non-use position. A locking mechanism is engageable between the base and the mixing head and has a solenoid having an operative end moveable between a rest condition and an actuated condition and a swing arm pivotably mounted with respect to the solenoid. The swing arm is moveable between a locked position, wherein the swing arm is engaged between the mixing head and the base, and a release position, wherein the swing arm is disengaged from the base. The solenoid acts on a lever end of the swing arm to move the swing arm into the release position when the solenoid is in the actuated condition.

According to another aspect of the disclosure, a stand mixer includes a base configured for resting on a surface and defining an articulating surface having an indentation, a mixing head coupled to the base so as to be moveable about the articulating surface between a lowered, operative position and a raised, non-use position, and a locking mechanism engageable between the base and the mixing head. The locking mechanism includes a solenoid having an operative end moveable between a rest condition and an actuated condition and a free member slidably disposed in an aperture in the mixing head and engageable with the indentation in the base. The locking mechanism further includes a blocking element mounted within the mixing head and moveable by the solenoid between a locked position, wherein the blocking element is engaged between the mixing head and the free member to retain the free member in engagement with the indentation, and a release position, wherein the blocking element is disengaged from the free member such that the free member is moveable out of the indentation and along the articulating surface.

According to another aspect of the disclosure, an electronic locking system for stand mixer includes a solenoid mountable within a mixing head of the stand mixer and having an operative end moveable between a rest condition and an actuated condition and a locking pin movably positioned in an aperture of the mixing head. The locking pin is engageable with an indentation in an articulating surface of a base of a stand mixer to which the mixing head is rotatably mounted. The system further includes a swing arm pivotably mounted with respect to the solenoid and moveable between a locked position, wherein the swing arm is engaged between the mixing head and the locking pin such that the mixing head is retained in a lowered, operative position, and a release position, wherein the swing arm is disengaged from the locking pin such that the mixing head is moveable into a raised, non-use position. The solenoid acts on a lever end of the swing arm to move the swing arm into the release position when the solenoid is in the actuated condition. The system further includes a power source configured to selectively connect and disconnect with at least one electronic component within the stand mixer, including the solenoid. The solenoid moves into the actuated condition under the application of an electrical potential thereto.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a perspective view of a stand mixer according to an aspect of the present disclosure;
FIG. 2 is a side view of the stand mixer with a mixing head thereof in a use position;
FIG. 3 is a cross section view of portion of the stand mixer showing a locking mechanism thereof in a locked condition to maintain the mixing head in the use position;
FIG. 4 is a cross section view of portion of the stand mixer showing a locking mechanism thereof in a release condition;
FIG. 5 is a side view of the stand mixer with the mixing head in a raised position, as allowed by the locking mechanism being in the release condition; and
FIG. 6 is a perspective detail view showing features of the stand mixer with the mixing head in the raised position.

The components in the figures are not necessarily to scale, emphasis instead being placed upon illustrating the principles described herein.

### DETAILED DESCRIPTION

The present illustrated embodiments reside primarily in combinations of method steps and apparatus components related to a stand mixer. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, numerals in the description and drawings represent like elements.

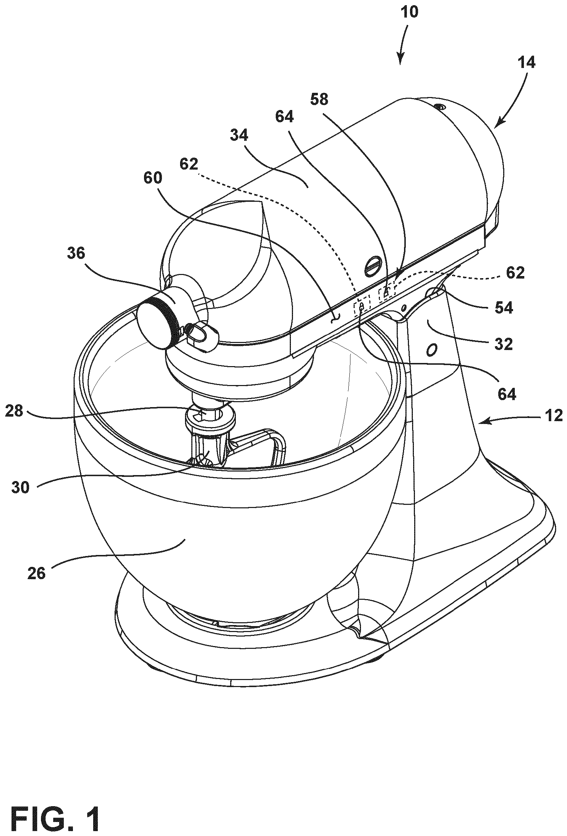

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a ... " does not, without more constraints, preclude the existence of additional identical elements in the process, method, article, or apparatus that comprises the element.

Ordinal modifiers (i.e., "first", "second", etc.) may be used to distinguish between various structures of a disclosed article in various contexts, but such ordinals are not necessarily intended to apply to such elements outside of the particular context in which they are used and that, in various aspects different ones of the same class of elements may be identified with the same, context-specific ordinal. In such instances, other particular designations of the elements are used to clarify the overall relationship between such elements. Ordinals are not used to designate a position of the elements, nor do they exclude additional, or intervening, non-ordered elements or signify an importance or rank of the elements within a particular class.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

For purposes of this disclosure, the terms "about", "approximately", or "substantially" are intended to mean that a value of a parameter is close to a stated value or position. However, minor differences may prevent the values or positions from being exactly as stated. Thus, unless otherwise noted, differences of up to ten percent (10%) for a given value are reasonable differences from the ideal goal of exactly as described. In many instances, a significant difference can be when the difference is greater than ten percent (10%), except as where would be generally understood otherwise by a person of ordinary skill in the art based on the context in which such term is used.

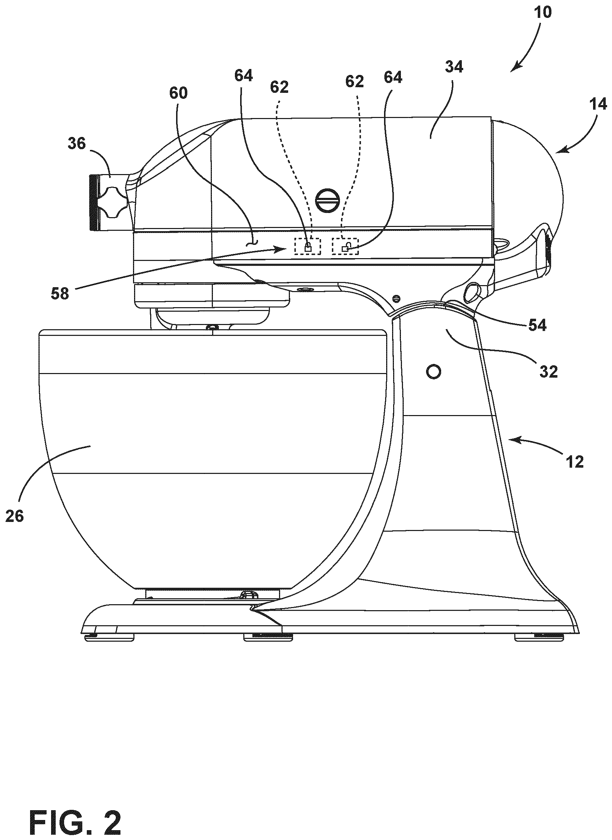

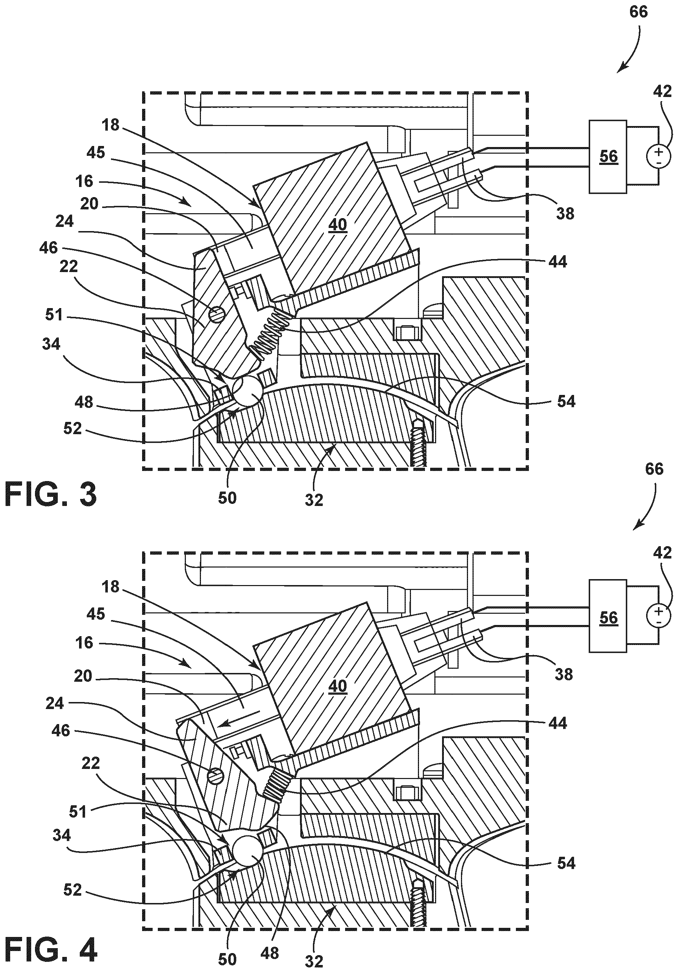

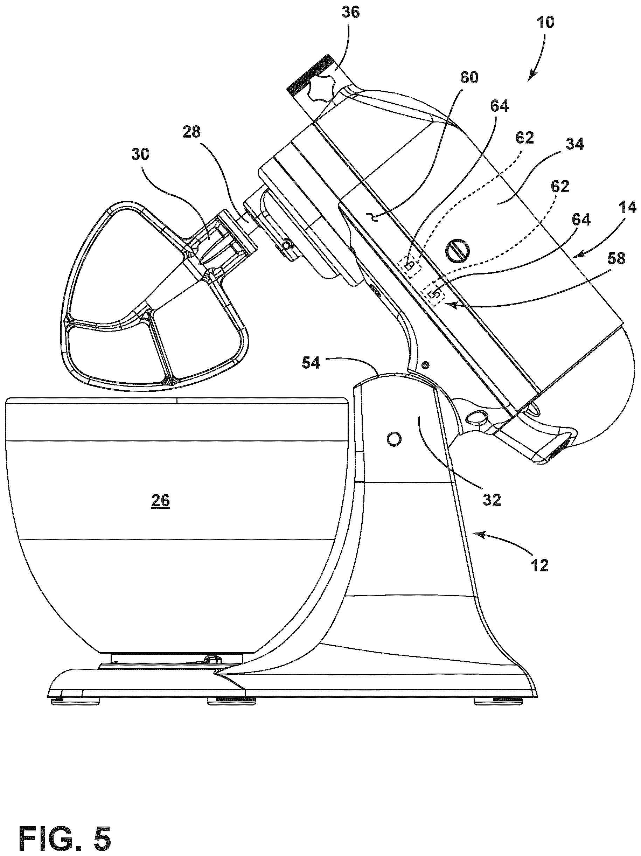

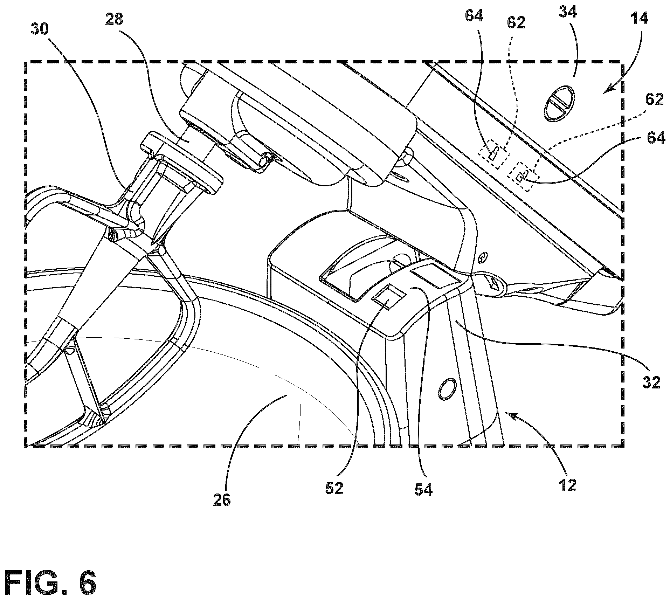

Referring to FIGS. 1-6, reference numeral 10 generally designates a stand mixer. The stand mixer 10 includes a base 12 configured for resting on a surface S and defining an articulating 54 surface having an indentation 52. A mixing head 14 is coupled to the base 12 so as to be moveable about the articulating 54 surface between a lowered, operative position (FIGS. 1 and 2) and a raised, non-use position (FIGS. 4 and 5). The stand mixer 10 also includes a locking mechanism 16 engageable between the base 12 and the mixing head 14. The locking mechanism 16 includes a solenoid 18 having an operative end 20 moveable between a rest condition (FIG. 3) and an actuated condition (FIG. 4) and a free member 50 slidably disposed in an aperture 51 in the mixing head 14 and engageable with the indentation 52 in the base 12. The locking mechanism 16 further includes a blocking element 22 mounted within the mixing head 14 and moveable by the solenoid 18 between a locked position (FIG. 3), wherein the blocking element 22 is engaged between the mixing head 12 and the free member 50 to retain the free member 50 in engagement with the indentation 52, and a release position (FIG. 4), wherein the blocking element 22 is disengaged from the free member 50 such that the free member 50 is moveable out of the indentation 52 and along the articulating surface 54. More particularly, in the illustrated implementation of the stand mixer 10 and associated locking mechanism 16, the blocking element 22 is in the form of a swing arm (also indicated by reference number 22) that is pivotably mounted with respect to the solenoid 18 and is rotatable between the aforementioned locked position and release position. As discussed further below, the solenoid 18 acts on a lever end 24 of the swing arm 22 to move the swing arm 22 into the release position when the solenoid 18 is in the actuated condition. In a similar manner, and as discussed further below, the free member can be in the form of a locking pin 50.

In general, the stand mixer 10 described herein may be generally configured as an electronic appliance used for mixing ingredients. According to a typical construction, the stand mixer 10 includes a bowl 26 that is anchored or otherwise retained by the mixer 10. The mixer 10 includes an output 28 that is retained in a fixed position with respect to the bowl 26. Various mixing tools can be connected to the output 28 for use in connection with various ingredients and desired results or purposes. Mixer 10 is configured to drive such tools, including the depicted beater attachment 30, in a planetary motion that involves rotating the mixing tool about a moving axis that rotates about a central fixed axis (that aligns with a center of the mixing bowl 26). This arrangement is used to develop more even incorporation of ingredients during mixing by re-incorporating the ingredients, for example. The mixing bowl 26 is removably coupled with the base 12 such that the beater attachment 30, for example can mix or otherwise process ingredients contained in the mixing bowl 26. As shown, the beater attachment 30 may be used, in one aspect, to prepare batters, frostings, and other viscous food products that are intended to be thicker in consistency than items processed using a whisk, for example, while not settling into a cohesive mass, as would a dough, for example (which may be processed using a separate element in the form of a hook, for example).

The present stand mixer 10 is what may be generally referred to as a "tilt-head" mixer, in which the mixing head 14 is rotatably fixed about an upper end 32 of the base 12 by an extend sufficient to move the mixing tool (i.e., beater attachment 30) upwardly out of the bowl 26 such that the tool can be removed or the interior of the bowl 26 can be accessed or removed (such as for addition of ingredients or removal of the mixed product). As shown in FIG. 1, the stand mixer 10 includes the above-mentioned mixing head 14 having a housing 34 connected to base 12, which supports the mixing head 14 above a work surface S. The housing 34 encloses a drive motor that is configured to drive planetary movement of the output 28, as described above, as well as rotating a coupling within the attachment hub 36. In one example, the drive motor can be a variable speed AC motor that can be controlled by a user via a sliding control knob accessible on the exterior of the housing 34. In other examples, the drive motor can be a DC motor, including a brushless DC motor that can be controlled digitally using an adaptation of the control knob or using a digital interface.

Referring generally to FIGS. 3 and 4, the above-mentioned solenoid 18 moves into the actuated position (FIG. 4) under the application of an electric potential thereto, which can be achieved by connecting a source of an electric current thereto, such as by contacts 38 on an exterior of a body 40 of the solenoid 18. In this manner, the stand mixer 10 can include a power source 42 configured to provide an electrical connection to at least one electronic component within the stand mixer 10, including the solenoid 18. In one arrangement, the power source 42 can be a mains power connection for connection with a wall outlet with appropriate circuitry for providing the particular voltage and current to the selected solenoid 18. As can be appreciated, the power source 42 can be the same power source 42 that is used in connection with the motor of the stand mixer 10, with appropriate configuration for the particular type of motor, as discussed above, and as further discussed below. As is typical of solenoids in general, the solenoid 18 shown in FIGS. 3 and 4 can be configured such that in the absence of electrical potential (e.g., via disconnection from the power source 42) the solenoid 18 returns to the rest position (FIG. 3).

As further shown in FIGS. 3 and 4, the locking mechanism 16 can further include a spring 44 configured to bias the swing arm 22 toward the locked position of FIG 3. In this manner, the solenoid 18 can be used to manipulate the locking mechanism 16 according to a scheme in which the solenoid 18, when electrically disconnected from the power source 42, is configured as shown in FIG. 3, which corresponds with the rest condition. In the rest condition, the rod 45 on which the operative end 20 of the solenoid 18 is defined is partially withdrawn into the solenoid body 40. In this configuration, the swing arm 22 is positioned with the lever arm 24 allowed to rotate under the extension force of the spring 44 toward the solenoid body 40. As shown, the swing arm 22 is rotatably mounted on an axle 46 such that a cam end 48 of the swing arm 22 (against which the spring 44 is positioned) moves away from the solenoid body 40 in such position to engage between the mixing head 14 and the base 12 and, accordingly, maintain the mixing head 14 in a locked condition relative to the base 12, whereby the mixing head 14 is maintained in the lowered use position of FIG. 1 and prevented from being tilted back to the position shown in FIG 5.

In the illustrated implementation of the present locking mechanism 16, locking pin 50 is included within the housing 34 of the mixing head 14 to facilitate engagement and disengagement of the swing arm 22 with the base 12. In this respect, it is noted that the above-mentioned axle 46 pivotably connects the swing arm 22 with the housing 34 such that the swing arm 22 is continuously engaged with the mixing head 14. The locking pin 50 is received within an aperture 51 in the housing 34 that is sized such that the locking pin 50 can extend partially through the housing 34 to engage with an indentation 52 in an articulating surface 54 of the base 12, while being further sized to prevent the locking pin 50 from passing fully therethrough so as to become disengaged from the mixing head 14. As shown in FIG. 3, the swing arm 22 engages with the base by moving into the depicted position in which the cam end 48 thereof abuts the locking pin 50 when the swing arm 22 is allowed to move into the locked position under the force of spring 44 by withdrawal of the rod 45 into the solenoid body 40. The engagement of the cam end 48 of the swing arm 22 maintains the locking pin 50 in an engaged position with the indentation 52, with the position of the locking pin 50 being fixed within the aperture 51 such that the mixing head 14 is maintained in the use position. As shown in FIG. 4, the locking pin 50 is moveable into the aperture 51 to a withdrawn position in the mixing head 14 when the swing arm 22 is in the release position (by way of the power source 42 being electrically connected with the solenoid 18, as discussed above). In this arrangement, the locking pin 50 can move out of the indentation 52 by movement of the pin 50 into the housing 34. This configuration can allow for upward tilting of the mixing head 14 on the base 12 by movement of the locking pin 50 out of the indentation 52 and along the articulating surface 54.

As noted above, there are multiple implementations of the motor used to operate the stand mixer 10, as described herein. Notably, the types and configurations of such motors can impact the configuration and nature of the power source 42 used in connection with the stand mixer 10, which can facilitate the use of different arrangements to control the operation of the locking mechanism 16 discussed above. In one such variation, the stand mixer 10 includes a controller 56 connected between the power source 42 and the solenoid 18 and configured to selectively connect and disconnect the power source 42 with the solenoid 18 for selective application of the electrical potential to the solenoid 18. As can be appreciated, the controller 56 can include electronic circuitry to control the use and operation of, for example, a brushless DC motor and can include logic used in connection therewith (which can be included in memory associated with a processor or the like for execution of the logic). In this manner, the controller 56 can also control the connection between the power source 42 and the solenoid 18. The use of such a controller 56 can allow for a variety of features to be used for user control of motor operation, as well as control of the locking mechanism 16. In various examples, such interfaces can include digital buttons or touch interfaces. In some examples, capacitive touch elements can be embedded in or otherwise operably associated with the housing 34 and connected with the controller 56 to provide a user interface 58. In either example, digital indicators (such as light elements or the like) can also be incorporated to provide visual feedback of the control state. As shown in FIGS. 1 and 2, the stand mixer 10 can include a user interface 58 that is exposed on an exterior 60 of the stand mixer 10 (in particular, of housing 34) and in electrical communication with the controller 56 (FIGS. 3 and 4) to facilitate user selection of the locked state and the release state of the solenoid 18. In the depicted example, the user interface 58 includes capacitive touch areas 62 positioned in connection with visual indicators 64 corresponding with the state of the locking mechanism 16, with other interface types being possible. It can be appreciated, that in such an example, the controller 56 can be programmed to automatically lock and unlock the locking mechanism 16 in response to certain operating condition (such as the motor being turned on and off).

In another variation, the stand mixer 10 can be configured for operation under power directly from mains AC power. In this respect, the motor may be controlled by an electromechanical switch that directly connects and disconnects the mains power with the motor. In such a variation (which, as noted above, may include an adapter to provide the appropriate voltage and current for operation of the solenoid 18), the stand mixer 10 may include an electromechanical switch connected between the power source 42 and the solenoid 18 and configured to selectively connect and disconnect the power source 42 with the solenoid 18 for selective application of the electrical potential to the solenoid 18. In such a variation, a user-manipulable interface element can be connected with the switch and can have a portion (such as a knob, lever, or the like) exposed on the exterior 60 of the stand mixer 10 for controlling the selective connection and disconnection of the power source 42 with the solenoid 18. In certain implementations, the control element can be configured with a look and feel similar to those associated with existing mechanical locking mechanisms 16. In a corresponding aspect, the above described locking mechanism, and described variations thereof, can an electronic locking system 66 for variations of the depicted stand mixer 10.

The invention disclosed herein is further summarized in the following paragraphs and is further characterized by combinations of any and all of the various aspects described therein.

According to another aspect of the present disclosure, a stand mixer includes a base configured for resting on a surface and a mixing head coupled to the base so as to be moveable between a lowered, operative position and a raised, non-use position. A locking mechanism is engageable between the base and the mixing head and has a solenoid having an operative end moveable between a rest condition and an actuated condition and a swing arm pivotably mounted with respect to the solenoid. The swing arm is moveable between a locked position, wherein the swing arm is engaged between the mixing head and the base, and a release position, wherein the swing arm is disengaged from the base. The solenoid acts on a lever end of the swing arm to move the swing arm into the release position when the solenoid is in the actuated condition.

In the stand mixer of ¶ [0030], the locking mechanism can further include a locking pin engageable with an indentation in an articulating surface of the base through an aperture in the mixing head, and the swing arm can engage between the mixing head and the base by abutting the locking pin when in the locked position.

In the stand mixer of ¶ [0031], the swing arm can maintain the locking pin in an engaged position with the indentation when the swing arm is in the locked position such that the mixing head is maintained in the operative position.

In the stand mixer of ¶¶ [0030] or [0031], wherein the locking pin is moveable into the aperture in the mixing head when the swing arm is in the release position such that the locking pin moves out of the indentation and along the articulating surface to allow the mixing head to be moved into the raised position.

In the stand mixer of any of ¶¶ [0030]-[0033], the locking mechanism can further include a spring configured to bias the swing arm toward the locked position.

In the stand mixer of any of ¶¶ [0030]-[0034], the solenoid can move into the actuated position under the application of an electrical potential thereto, and the stand mixer can further include a power source configured to provide an electrical connection to at least one electronic component within the stand mixer, including the solenoid.

The stand mixer of ¶ [0035] can further include an electromechanical switch connected between the power source and the solenoid and configured to selectively connect and disconnect the power source with the solenoid for selective application of the electrical potential to the solenoid and a user-manipulable interface element having a portion exposed on an exterior of the stand mixer and coupled with the electromechanical switch and configured for controlling the selective connection and disconnection of the power source with the solenoid.

The stand mixer of ¶ [0033] can further include a controller connected between the power source and the solenoid and configured to selectively connect and disconnect the power source with the solenoid for selective application of the electrical potential to the solenoid and a user interface exposed on an exterior of the stand mixer and in electrical communication with the controller to facilitate user selection of the locked state and the release state of the solenoid.

According to another aspect, a stand mixer includes a base configured for resting on a surface and defining an articulating surface having an indentation, a mixing head coupled to the base so as to be moveable about the articulating surface between a lowered, operative position and a raised, non-use position, and a locking mechanism engageable between the base and the mixing head. The locking mechanism includes a solenoid having an operative end moveable between a rest condition and an actuated condition and a free member slidably disposed in an aperture in the mixing head and engageable with the indentation in the base. The locking mechanism further includes a blocking element mounted within the mixing head and moveable by the solenoid between a locked position, wherein the blocking element is engaged between the mixing head and the free member to retain the free member in engagement with the indentation, and a release position, wherein the blocking element is disengaged from the free member such that the free member is moveable out of the indentation and along the articulating surface.

the stand mixer of ¶ [0038], the blocking element can be a swing arm pivotably mounted with respect to the solenoid and rotatable between the locked position and the release position, the solenoid acting on a lever end of the swing arm to move the swing arm into the release position when the solenoid is in the actuated condition.

In the stand mixer of ¶ [0039], the locking mechanism can further include a spring configured to bias the swing arm toward the locked position.

In the stand mixer of any of ¶¶ [00380 to [0039], the free member can be a locking pin engageable with the indentation in of the base through the aperture in the mixing head, and the blocking element arm can engage between the mixing head and the base by abutting the locking pin when in the locked position.

In the stand mixer of any of ¶¶ [0038] to [0041], the blocking element maintaining the free element in the engagement with the indentation can be such that the mixing head is maintained in the operative position.

In the stand mixer of any of ¶¶ [0038] to [0042], the blocking element being disengaged from the free member such that the free member is moveable out of the indentation and along the articulating surface can allow the mixing head to be moved into the raised position.

In the stand mixer of any of ¶¶ [0038] to [0043], the solenoid can move into the actuated condition under the application of an electrical potential thereto, and the stand mixer can further include a power source configured to selectively connect and disconnect with at least one electronic component within the stand mixer, including the solenoid.

The stand mixer of 1 [0044] can further include an electromechanical switch connected between the power source and the solenoid and configured to selectively connect and disconnect the power source with the solenoid for selective application of the electrical potential to the solenoid and a user-manipulable interface element having a portion exposed on an exterior of the stand mixer and coupled with the electromechanical switch and configured for controlling the selective connection and disconnection of the power source with the solenoid.

The stand mixer of 1 [0044] can further include a controller connected between the power source and the solenoid and configured to selectively connect and disconnect the power source with the solenoid for selective application of the electrical potential to the solenoid and a user interface exposed on an exterior of the stand mixer and in electrical communication with the controller to facilitate user selection of the locked state and the release state of the solenoid.

According to a further aspect, an electronic locking system for stand mixer includes a solenoid mountable within a mixing head of the stand mixer and having an operative end moveable between a rest condition and an actuated condition and a locking pin movably positioned in an aperture of the mixing head. The locking pin is engageable with an indentation in an articulating surface of a base of a stand mixer to which the mixing head is rotatably mounted. The system further includes a swing arm pivotably mounted with respect to the solenoid and moveable between a locked position, wherein the swing arm is engaged between the mixing head and the locking pin such that the mixing head is retained in a lowered, operative position, and a release position, wherein the swing arm is disengaged from the locking pin such that the mixing head is moveable into a raised, non-use position. The solenoid acts on a lever end of the swing arm to move the swing arm into the release position when the solenoid is in the actuated condition. The system further includes a power source configured to selectively connect and disconnect with at least one electronic component within the stand mixer, including the solenoid. The solenoid moves into the actuated condition under the application of an electrical potential thereto.

In the electronic locking system of ¶¶ [0047], the locking mechanism can further include a spring configured to bias the swing arm toward the locked position.

The electronic locking system of ¶¶ [0047]or [0048]can further include an electromechanical switch connected between the power source and the solenoid and configured to selectively connect and disconnect the power source with the solenoid for selective application of the electrical potential to the solenoid and a user-manipulable interface element having a portion exposed on an exterior of the stand mixer and coupled with the electromechanical switch and configured for controlling the selective connection and disconnection of the power source with the solenoid.

21. The electronic locking system of ¶¶ [0047] or [0048] can further include a controller connected between the power source and the solenoid and configured to selectively connect and disconnect the power source with the solenoid for selective application of the electrical potential to the solenoid and a user interface exposed on an exterior of the stand mixer and in electrical communication with the controller to facilitate user selection of the locked state and the release state of the solenoid.

It will be understood by one having ordinary skill in the art that construction of the described disclosure and other components is not limited to any specific material. Other exemplary embodiments of the disclosure disclosed herein may be formed from a wide variety of materials, unless described otherwise herein.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

## Claims

1. A stand mixer (10) comprising:
a base (12) configured for resting on a surface;
a mixing head (14) coupled to the base (12) so as to be moveable between a lowered, operative position and a raised, non-use position; and
a locking mechanism (16) engageable between the base (12) and the mixing head (14) and including:
a solenoid (18) having an operative end (20) moveable between a rest condition and an actuated condition; and
a swing arm (22) pivotably mounted with respect to the solenoid (18) and moveable between a locked position, wherein the swing arm (22) is engaged between the mixing head (14) and the base (12), and a release position, wherein the swing arm (22) is disengaged from the base (12), the solenoid (18) acting on a lever end of the swing arm (24) to move the swing arm (22) into the release position when the solenoid (18) is in the actuated condition.

2. The stand mixer (10) of claim 1, wherein the locking mechanism (16) further includes a locking pin (50) engageable with an indentation (52) in an articulating surface (54) of the base (12) through an aperture (51) in the mixing head (14).

3. The stand mixer (10) of claim 2, wherein the swing arm (22) engages between the mixing head (14) and the base (12) by abutting the locking pin (50) when in the locked position.

4. The stand mixer (10) of either claim 2 or claim 3, wherein the swing arm (22) maintains the locking pin (50) in an engaged position with the indentation (52) when the swing arm (22) is in the locked position such that the mixing head (14) is maintained in the operative position.

5. The stand mixer (10) of any one of claims claim 2 to 4, wherein the locking pin (50) is moveable into the aperture (51) in the mixing head (14) when the swing arm (22) is in the release position such that the locking pin (50) moves out of the indentation (52) and along the articulating surface (54) to allow the mixing head (14) to be moved into the raised position.

6. The stand mixer (10) of any of the preceding claims, wherein the locking mechanism (16) further includes a spring (44) configured to bias the swing arm (22) toward the locked position.

7. The stand mixer (10) of any of the preceding claims, wherein the solenoid (18) moves into the actuated condition under the application of an electrical potential thereto.

8. The stand mixer (10) of claim 7, further including a power source (42) configured to selectively connect and disconnect with at least one electronic component within the stand mixer (10), including the solenoid (18).

9. The stand mixer (10) of claim 8, further including an electromechanical switch connected between the power source (42) and the solenoid (18) and configured to selectively connect and disconnect the power source (42) with the solenoid (18) for selective application of the electrical potential to the solenoid (18).

10. The stand mixer (10) of claim 9, further including a user-manipulable interface element having a portion exposed on an exterior (60) of the stand mixer (10) and coupled with the electromechanical switch and configured for controlling the selective connection and disconnection of the power source (42) with the solenoid (18).

11. The stand mixer (10) of claim 7, further including a controller (56) connected between the power source (42) and the solenoid (18) and configured to selectively connect and disconnect the power source (42) with the solenoid (18) for selective application of the electrical potential to the solenoid (18).

12. The stand mixer (10) of claim 11, further including a user interface (58) exposed on an exterior (60) of the stand mixer (10) and in electrical communication with the controller (56) to facilitate user selection of the locked state and the release state of the solenoid (18).
